# EUROPEAN PATENT SPECIFICATION

(11) **EP 2 136 308 B1**
(45) Date of publication and mention of the grant of the patent: **09.02.2011**
(21) Application number: 08104480.2
(22) Date of filing: 19.06.2008
(51) Int. Cl.: G06F 21/00, H04L 9/32, H04L 29/06, G05D 1/00

(54) **A sensor unit capable of sending data and a signature for the data in a real time environment**
Sensoreinheit zum Senden von Daten und Signatur für die Daten in einer Echtzeitumgebung
Unité de capteur d'envoi de données et signature pour les données dans un environnement en temps réel

(43) Date of publication of application: 23.12.2009
(73) Proprietor: Robert Bosch GmbH, 70442 Stuttgart (DE)
(72) Inventor: Challand, Yves, 68165 Mannheim (DE); Schaeuble, Jochen, 73728 Esslingen (DE)

(56) References cited:
- EP-A- 0 347 034
- WO-A-01/22873
- US-A1- 2003 073 406
- US-A1- 2006 036 864

## Description

### State of the Art

The invention relates to the field of sensor units capable of sending measurements along with a digital signature.

The sensor units sending data along with a digital signature are known in the prior art. One such sensor unit is disclosed in the patent application US 2004/016272 A1.

### Advantages of the invention

The device and method according to the independent patent claims have the below mentioned advantages:
The sensor unit sends some measurements along with a signature and sends some measurements without a signature, resulting in saving in the bandwidth on the transmission lines and cpu runtime on sensor unit. This provides efficient method of ensuring data integrity.

The electronic control unit which receives measurements from the sensor unit, needs to calculate signature only for a pre-defined number of measurements, from a total number of measurements. This saves the processing power of ECU and still ensures the overall security for the measurements sent by the sensor unit.

Further improvements and/or advantages are realised by the features of the dependent patent claims.

Triggers sent by the sensor unit notifying start of the calculation of the signature, start of the transmission of the signature and end of the transmission of the signature will provide synchronisation of the sensor unit with the ECU, to receive the information correctly . The triggers will also provide a configurability to vary the number of measurements which need to have the signature and to vary the number of measurements which need not have a signature.

Splitting the signature into a pre-defined number of parts and sending each part along with a measurement will result in transmission of measurements without a gap and helps in maintaining real time requirements of the ECU.

### Brief descriptions of the drawings

- Figure 1: shows the schematic of connectivity of a sensor unit with an ECU
- Figure 2: shows the data and the triggers sent by the sensor unit to the ECU

### Description of the embodiments

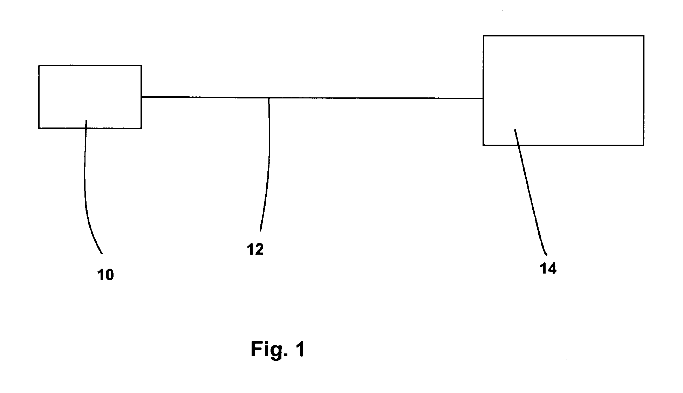

Shown in Fig. 1 is a sensor unit 10 connected to an ECU 14 using a communication line 12. The communication between the sensor unit 10 and the ECU 14 is an unidirectional communication having a standard serial interface, for example, Peripheral Sensor Interface (PSI5).

The sensor units are widely used in different areas and one of the major areas is automobiles. Variety of sensor units are used in automobiles. Some examples are speed sensors, air flow sensors, temperature sensors, pressure sensors, exhaust gas sensors etc. These sensor units measure a physical quantity, convert it into a signal and send the measurement to a receiving device, for example, an ECU in a vehicle. The measurements from the sensor units are used by the ECU to control the vehicle. Hence the measurements coming from the sensor units need to be reliable and there should not be any scope to manipulate the measurements from the sensor units. To achieve this some of the sensor units in the prior arts send a digital signature along with the measurements to assure the authenticity of the measurements.

The invention is applicable to all types of sensor units. As an example the description refers to a rail pressure sensor unit in a vehicle which is typically an automobile. The rail pressure sensor unit measures the pressure in the fuel rail and sends this measurement to the ECU. The ECU uses this information to decide for example, the timing and the duration of the fuel injection into the combustion chamber. As the timing, duration and the amount of fuel injected into the combustion chamber depends on the measurements provided by the rail pressure sensor unit, the measurements need to be highly reliable. The invention proposes a method of sending secure measurements from the pressure sensor unit to the ECU, using a signature for the measurements. Instead of generating and sending a signature for each of the measurements, the invention proposes to generate and send a signature for a set of measurements, thus reducing the over heads and still achieving the secure transmission of the measurements. Also the invention proposes to send the signature in parts to save the bandwidth and to achieve real time requirements of the ECU.

The invention provides an easy method of detecting the unauthorised manipulation of the measurements sent from the sensor unit.

If the sensor unit measurements are manipulated, in the absence of the data integrity check the ECU will receive the manipulated measurements which will not represent the true measurements, for example pressure in the rail and use the manipulated measurements to control the vehicle. Under this condition, the engine may malfunction or the engine characteristics may change or the engine or the other components in the vehicle may get damaged.

The sensor unit 10 collects a set of measurements which are in digital form and also referred as digital values and sends the same to the ECU 14. The sensor unit 10 also computes a signature for the said set of measurements. As the sending of the complete signature at a stretch may occupy part of the bandwidth affecting real time transmission of the next measurements from the sensor unit, the signature is split into M parts, where M is a pre-defined integer and each part of the signature is sent along with a measurement till the complete signature is sent to the ECU 14.

The signature is generated using a standard public key/private key concept. To generate a signature, first a hash value or a checksum is generated for the data for which a signature is needed. The hash value or the checksum is generated using a standard hash function. The hash function takes a string or a message of any length as input and produces a fixed length string as output, termed as hash value or a fingerprint. The hash value or the fingerprint is encoded using a private key known only to the sensor unit and the result is the signature.

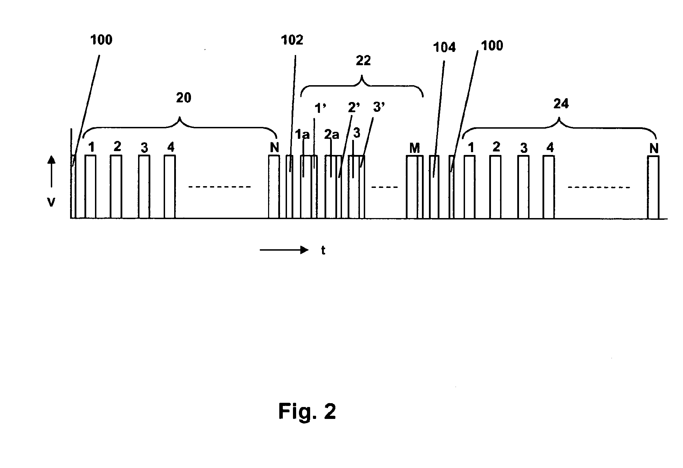

The generation and transmission of signature along with measurements is explained with Fig. 2

Here the measurements, triggers and the parts of the signatures are shown symbolically as pulses in respective slots, but in reality each will consist of a bit pattern.

Shown in Fig. 2 is the information sent by the sensor unit 10 to the ECU 14. The said information includes the measurements, signature and triggers. The X axis represents the time t and the Y axis represents the amplitude v (voltage).

The sensor unit 10 sends the first trigger 100 to inform the ECU 14 to start the computation of the signature with the next measurement. The sensor unit 10 then sends a set of measurements as shown in block 20, the set containing N number of measurements 1,2,3.....N where N is pre-defined integer. To save memory resources, the invention proposes to calculate the hash value or the fingerprint of the measurements using the stream algorithm, as and when a measurement is taken, i.e. the first measurement is taken, a hash value of the first measurement is computed, the first measurement is sent to the ECU 14, a second measurement is taken, the previous hash value is combined with the second measurement and a new hash value is generated, the second measurement is sent to the ECU 14. The above steps are repeated for the N measurements and a final hash value or the fingerprint is obtained. The hash value or the fingerprint is encoded using a private key known only to the sensor unit to generate the signature.

The sensor unit splits the signature into M parts, where M is a pre-defined integer. After Nth measurement is sent, the sensor unit 10 sends a second trigger 102 to inform the ECU 14 that the next information block 22 will contain measurements 1a, 2a, 3a up to M and also will contain parts of the signature 1', 2', 3' ... along with each measurement, as shown in block 22. After sending the information block 22, the sensor unit sends a third trigger 104 indicating that the transmission of the signature is complete. The sensor unit 10 repeats the above steps continuously.

When the ECU 14 receives the first trigger 100, it will initialise the computation of hash value or the fingerprint of the measurements which will follow.

It receives a set of measurements, the set consisting of N measurements where N is pre-defined integer. As and when these measurements arrive, the ECU will use them for controlling the vehicle. Once the ECU 14 receives the second trigger 102, the ECU will stop computing the hash value or the fingerprint of the data values. The ECU will receive information block 22 which contains measurements 1a, 2a, 3a... and also parts of the signature 1', 2', 3' ... as shown in block 22. The ECU 14 will separate the measurements and use them to control the vehicle. The parts of the signature are stored. When the ECU receives the third trigger 104, the ECU 14 will reconstruct the received signature using the parts of the signature and decode the signature using a public key, verifies the decoded signature with the computed hash value or the fingerprint of the measurements. When the decoded signature matches with the computed hash value, it means the N measurements, already received between first trigger and the second trigger are authentic.

If the decoded signature does not match with the computed hash value, the measurements received between the first trigger and the second trigger are not authentic and would have undergone manipulation. The error handling may be activated if the error occurs for a pre-defined number of times. The error handling may include activating the safety measures in the vehicle, generating a notification to the user and bringing the vehicle safely to a halt. Other possibility when the error occurs is to reduce the engine power within the safety limits.

## Claims

1. A sensor unit (10) capable of taking measurements, converting the measurements into digital values and sending the digital values to an ECU (14), **characterised in that** the said sensor unit (10) sends some digital values with a signature and sends some digital values without a signature.

2. A sensor unit (10) according to claim 1 wherein the sensor unit (10) sends a first trigger (100) to notify the start of the calculation of the signature.

3. A sensor unit (10) according to claim 1 wherein the sensor unit (10) sends N digital values (20) to the ECU where N is a pre-defined integer.

4. A sensor unit (10) according to claim 3 wherein the sensor unit (10) keeps computing a hash value of the digital values as and when the digital values are obtained, finally computing the signature using the hash value.

5. A sensor unit (10) according to claim 4 wherein the sensor unit (10) splits the computed signature into M parts where M is a pre-define integer.

6. A sensor unit (10) according to claim 5 wherein the sensor unit (10) sends a second trigger (102) to notify the start of transmission of parts of the signature.

7. A sensor unit (10) according to claim 5 and 6 wherein the sensor unit (10) sends M digital values (1a, 2a, 3a,....) along with a part of the signature (1', 2', 3'..) with each digital value.

8. A sensor unit (10) according to claim 1 wherein the sensor unit (10) sends a third trigger (104) to notify the end of the transmission of the signature.

9. An electronic control unit ECU (14) capable of receiving measurements from a sensor unit (10), in the form of digital values, **characterised in that** the ECU (14) verifies the data integrity of the digital values for which a signature is sent by the sensor unit (10) and does not verify the data integrity of the digital values for which a signature is not sent by the sensor unit (10).

10. An ECU (14) according to claim 9 wherein the ECU (14) starts calculating the hash value or the fingerprint of the digital values (20) after receiving a first trigger (100).

11. An ECU (14) according to claim 9 wherein the ECU (14) receives N digital values (20) after the first trigger (100).

12. An ECU (14) according to claim 11 wherein the ECU (14) uses the digital values received from the sensor unit (10) to control the vehicle.

13. An ECU (14) according to claim 9 wherein the ECU (14) receives a second trigger (102) indicating next digital values (22) will contain part of the signature.

14. An ECU (14) according to claim 13 wherein the ECU (14) receives M digital values (22), each digital value appended with a part of the signature.

15. An ECU (14) according to claim 9 wherein the ECU (14) receives a third trigger (104) indicating the end of transmission of signature.

16. An ECU (14) according to claim 14 and 15 wherein the ECU (14) after receiving a third trigger (104), reconstructs the signature from parts of the signature received.

17. An ECU (14) according to claim 16 wherein the ECU (14) decodes the reconstructed signature using a public key which is pre-stored.

18. An ECU (14) according to claim 17 wherein the ECU (14) compares the hash value or the fingerprint of the signature with decoded signature and generates an error notification if hash value or fingerprint does not match with decoded signature.

19. A method to transfer digital values and to perform an integrity check on the digital values comprising the steps:
- some digital values are sent with signature
- some digital values are sent without signature
- receiver performs the integrity check for the digital values which are sent with a signature.

## Patentansprüche

1. Sensoreinheit (10) mit der Fähigkeit zum Nehmen von Messungen, Umsetzen der Messungen in digitale Werte und Senden der digitalen Werte zu einer ECU (14), **dadurch gekennzeichnet, dass** die Sensoreinheit (10) bestimmte digitale Werte mit einer Signatur und bestimmte digitale Werte ohne Signatur sendet.

2. Sensoreinheit (10) nach Anspruch 1, wobei die Sensoreinheit (10) einen ersten Trigger (100) sendet, um den Anfang der Berechnung der Signatur zu melden.

3. Sensoreinheit (10) nach Anspruch 1, wobei die Sensoreinheit (10) N digitale Werte (20) zu der ECU sendet, wobei N eine vordefinierte ganze Zahl ist.

4. Sensoreinheit (10) nach Anspruch 3, wobei die Sensoreinheit (10) immer weiter einen Hash-Wert der digitalen Werte berechnet, während und wenn die digitalen Werte erhalten werden, und schließlich die Signatur unter Verwendung des Hash-Werts berechnet.

5. Sensoreinheit (10) nach Anspruch 4, wobei die Sensoreinheit (10) die berechnete Signatur in M Teile aufteilt, wobei M eine vordefinierte ganze Zahl ist.

6. Sensoreinheit (10) nach Anspruch 5, wobei die Sensoreinheit (10) einen zweiten Trigger (102) sendet, um den Anfang der Übertragung von Teilen der Signatur zu melden.

7. Sensoreinheit (10) nach Anspruch 5 und 6, wobei die Sensoreinheit (10) M digitale Werte (la, 2a, 3a,...) zusammen mit einem Teil der Signatur (1', 2', 3'..) mit jedem digitalen Wert sendet.

8. Sensoreinheit (10) nach Anspruch 1, wobei die Sensoreinheit (10) einen dritten Trigger (104) sendet, um das Ende der Übertragung der Signatur zu melden.

9. Elektronische Steuereinheit ECU (14) mit der Fähigkeit zum Empfangen von Messungen von einer Sensoreinheit (10) in Form von digitalen Werten, **dadurch gekennzeichnet, dass** die ECU (14) die Datenintegrität der digitalen Werte, für die eine Signatur durch die Sensoreinheit (10) gesendet wird, verifiziert und die Datenintegrität der digitalen Werte, für die keine Signatur durch die Sensoreinheit (10) gesendet wird, nicht verifiziert.

10. ECU (14) nach Anspruch 9, wobei die ECU (14) nach dem Empfang eines ersten Triggers (100) mit dem Berechnen des Hash-Werts oder des Fingerabrucks der digitalen Werte (20) beginnt.

11. ECU (14) nach Anspruch 9, wobei die ECU (14) nach dem ersten Trigger (100) N digitale Werte (20) empfängt.

12. ECU (14) nach Anspruch 11, wobei die ECU (14) die von der Sensoreinheit (10) empfangenen digitalen Werte zur Steuerung des Fahrzeugs verwendet.

13. ECU (14) nach Anspruch 9, wobei die ECU (14) einen zweiten Trigger (102) empfängt, der angibt, dass nächste digitale Werte (22) einen Teil der Signatur enthalten werden.

14. ECU (14) nach Anspruch 13, wobei die ECU (14) M digitale Werte (22) empfängt, wobei jedem digitalen Wert ein Teil der Signatur angehängt wird.

15. ECU (14) nach Anspruch 9, wobei die ECU (14) einen dritten Trigger (104) empfängt, der das Ende der Signaturübertragung anzeigt.

16. ECU (14) nach Anspruch 14 und 15, wobei die ECU (14) nach dem Empfang eines dritten Triggers (104) die Signatur aus empfangenen Teilen der Signatur rekonstruiert.

17. ECU (14) nach Anspruch 16, wobei die ECU (14) die rekonstruierte Signatur unter Verwendung eines öffentlichen Schlüssels, der vorgespeichert ist, decodiert.

18. ECU (14) nach Anspruch 17, wobei die ECU (14) den Hash-Wert oder den Fingerabdruck der Signatur mit der decodierten Signatur vergleicht und eine Fehlerbenachrichtigung erzeugt, wenn der Hash-Wert oder der Fingerabdruck nicht mit der decodierten Signatur übereinstimmt.

19. Verfahren zum Transfer von digitalen Werten und zum Durchführen einer Integritätsprüfung an den digitalen Werten, mit den folgenden Schritten:
- bestimmte digitale Werte werden mit Signatur gesendet
- bestimmte digitale Werte werden ohne Signatur gesendet
- der Empfänger führt die Integritätsprüfung für die digitalen Werte durch, die mit einer Signatur gesendet werden.

## Revendications

1. Unité de détection (10) capable de prendre des mesures, de convertir les mesures en valeurs numériques et d'envoyer les valeurs numériques à une ECU (14), **caractérisée en ce que** ladite unité de détection (10) envoie certaines valeurs numériques avec une signature et envoie certaines valeurs numériques sans signature.

2. Unité de détection (10) selon la revendication 1, dans laquelle l'unité de détection (10) envoie un premier déclencheur (100) pour notifier du début du calcul de la signature.

3. Unité de détection (10) selon la revendication 1, dans laquelle l'unité de détection (10) envoie N valeurs numériques (20) à l'ECU, N étant un nombre entier prédéfini.

4. Unité de détection (10) selon la revendication 3, dans laquelle l'unité de détection (10) continue de calculer une valeur de hachage des valeurs numériques au fur et à mesure de l'obtention des valeurs numériques, calculant finalement la signature en utilisant la valeur de hachage.

5. Unité de détection (10) selon la revendication 4, dans laquelle l'unité de détection (10) divise la signature calculée en M parties, M étant un nombre entier prédéfini.

6. Unité de détection (10) selon la revendication 5, dans laquelle l'unité de détection (10) envoie un deuxième déclencheur (102) pour notifier du démarrage de l'émission des parties de la signature.

7. Unité de détection (10) selon les revendications 5 et 6, dans laquelle l'unité de détection (10) envoie M valeurs numériques (la, 2a, 3a, ...) conjointement avec une partie de la signature (1', 2', 3', ...) avec chaque valeur numérique.

8. Unité de détection (10) selon la revendication 1, dans laquelle l'unité de détection (10) envoie un troisième déclencheur (104) pour notifier de la fin de l'émission de la signature.

9. Unité de commande électronique ECU (14) capable de recevoir des mesures de la part d'une unité de détection (10), sous la forme de valeurs numériques, **caractérisée en ce que** l'ECU (14) vérifie l'intégrité des données des valeurs numériques pour lesquelles une signature est envoyée par l'unité de détection (10) et ne vérifie pas l'intégrité des données des valeurs numériques pour lesquelles une signature n'est pas envoyée par l'unité de détection (10).

10. ECU (14) selon la revendication 9, dans laquelle l'ECU (14) commence à calculer la valeur de hachage ou l'empreinte numérique des valeurs numériques (20) après la réception d'un premier déclencheur (100).

11. ECU (14) selon la revendication 9, dans laquelle l'ECU (14) reçoit N valeurs numériques (20) après le premier déclencheur (100).

12. ECU (14) selon la revendication 11, dans laquelle l'ECU (14) utilise les valeurs numériques reçues de l'unité de détection (10) pour commander le véhicule.

13. ECU (14) selon la revendication 9, dans laquelle l'ECU (14) reçoit un deuxième déclencheur (102) indiquant que les prochaines valeurs numériques (22) contiendront une partie de la signature.

14. ECU (14) selon la revendication 13, dans laquelle l'ECU (14) reçoit M valeurs numériques (22), chaque valeur numérique étant attachée à une partie de la signature.

15. ECU (14) selon la revendication 9, dans laquelle l'ECU (14) reçoit un troisième déclencheur (104) indiquant la fin de l'émission de la signature.

16. ECU (14) selon les revendications 14 et 15, dans laquelle l'ECU (14), après la réception d'un troisième déclencheur (104), reconstruit la signature à partir de parties de la signature reçues.

17. ECU (14) selon la revendication 16, dans laquelle l'ECU (14) décode la signature reconstruite en utilisant une clé publique qui est pré-stockée.

18. ECU (14) selon la revendication 17, dans laquelle l'ECU (14) compare la valeur de hachage ou l'empreinte numérique de la signature avec la signature décodée et génère une notification d'erreur si la valeur de hachage ou l'empreinte numérique ne coïncide pas avec la signature décodée.

19. Procédé pour transférer des valeurs numériques et pour effectuer un contrôle d'intégrité sur les valeurs numériques comprenant les étapes suivante
- certaines valeurs numériques sont envoyées avec une signature,
- certaines valeurs numériques sont envoyées sans signature,
- le récepteur effectue le contrôle d'intégrité des valeurs numériques qui sont envoyées avec une signature.
